# EUROPEAN PATENT APPLICATION

(11) **EP 4 783 548 A1**
(43) Date of publication of application: **29.07.2026**
(21) Application number: 25305081.9
(22) Date of filing: 23.01.2025
(51) Int. Cl.: H04L 65/1069, H04L 41/0833, H04L 41/0894

(54) **METHODS, APPARATUSES AND SYSTEMS FOR PROVISIONING AN ENERGY CONTROLLING POLICY TEMPLATE**

(71) Applicant: InterDigital CE Patent Holdings, SAS, 75017 Paris (FR)
(72) Inventor: AUMONT, Franck, 35770 VERN SUR SEICHE (FR); REINHARD, Erik, 35630 HEDE-BAZOUGES (FR); LE MEUR, Olivier, 35160 TALENSAC (FR); DEMARTY, Claire-Helene, 35520 MONTREUIL LE GAST (FR); BLONDE, Laurent, 35235 THORIGNE-FOUILLARD (FR)
(74) Representative: Interdigital

(57) **Abstract**

In an embodiment, a method implemented in a network node comprises receiving, from a media application provider, a first message comprising first information indicating an energy controlling policy template including an energy controlling specifications; determining whether the energy controlling specifications are supported by policy resources of an application function (AF); on condition that the energy controlling specifications are supported by the policy resources of the AF, determining an energy policy template resource of the AF based on the energy controlling specifications; and providing, to a wireless transmit/receive unit (WTRU), the energy policy template resource of the AF for one or more media delivery sessions with the WTRU.

## Description

### FIELD OF THE INVENTION

The present disclosure is generally directed to methods, architecture apparatuses and systems for provisioning an energy controlling policy template. More particularly, the present disclosure relates to methods to allow a mobile network operator, a service provider or an application provider to enable the controlling of the energy related information in order to reduce its energy and carbon impact to preserve the planet.

### BACKGROUND

A media delivery in a mobile ecosystem may imply a mobile network operator, an application provider, a service provider (both may be collectively called application provider), an end-user. A service layer agreement may exist between these parties, i.e. end-user subscription, agreement between the application provider and the mobile network operator. At present, these agreements do not consider the concept of "scopes" (i.e. Greenhouse Gas Protocol Standard) and no mechanisms exist for accounting and reporting purposes when a media delivery is realized in a mobile network ecosystem.

In the state of the art, when an application provider, e.g. an over the top (OTT) streaming application, has to deliver some media content on a 5G mobile network, it may start by identifying the application functions available in the network in accordance with the type of delivery it wishes to realize, i.e. 5G Media Streaming, 5G Real Time Communication (RTC), ...

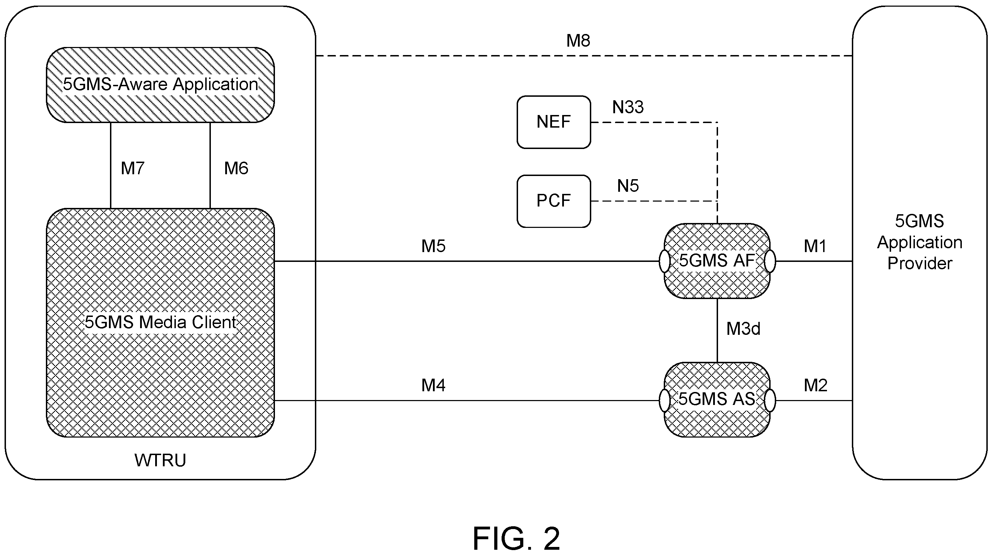

When the appropriate application function (AF) is identified, the application provider may create a provision session at the dedicated standardized interface of the selected AF, reference point M1 (see FIG. 2). In the current release 18 of 3GPP, this interface may not give the possibility to indicate any energy requirements and configure them accordingly for the media delivery sessions of a provisioning session.

The provision session may contains at least one of the following features: (i) a content hosting configuration; (ii) a consumption reporting configuration which defines consumption measurement, logging, collection and reporting functionality; a policy template; and a metrics reporting configuration which may define metrics measurement, e.g. quality of experience (QoE).

None of these features consider the energy aspect of the provision session and its associated media delivery sessions. The state-of-the-art of the 3GPP ecosystem (up to the release 18) may define several architectures to deliver media content from an application provider but, in these architectures, there does not exist any mechanism to configure and control energy consumption of the media delivery system from an application function (AF) if a media application provider requests it.

There is a need to resolve the above issues.

### SUMMARY

In an embodiment, a method, implemented in a network node, may comprise a step of receiving, from a media application provider, a first message comprising first information indicating an energy controlling policy template including an energy controlling specifications. The method may further comprise a step of determining whether the energy controlling specifications are supported by policy resources of an application function (AF). On condition that the energy controlling specifications are supported by the policy resources of the AF, the method may comprise a step of determining an energy policy template resource of the AF based on the energy controlling specifications; and a step of providing, to a wireless transmit/receive unit (WTRU), the energy policy template resource of the AF for one or more media delivery sessions with the WTRU.

The energy controlling specifications may comprise second information indicating any of a mode of energy controlling to be applied, an energy controlling level, and an energy of service (EoS) controlling range. The EoS controlling range may comprise a time window indicating an absolute start date time and stop date time of the window at which the EoS range is applied. The energy controlling specifications may indicate EoS specifications in any of a downlink direction, and an uplink direction. The energy policy template resource of the AF for the one or more media delivery sessions with the WTRU may comprise third information indicating an energy credit related to the one or more media delivery sessions or a provisioning session, for any of the WTRU, a radio access network, core network nodes, and an application server. The energy credit indication may comprise a maximal energy credit authorized to any of the one or more media delivery sessions or provisioning session, and media components, for any of the WTRU, a radio access network, core network nodes, and an application server.

On condition that the energy controlling specifications are not supported by the policy resources of the AF, the method may comprise a step of switching a state of the policy resources of the AF from a created state to an uncreated state; a step of determining another AF wherein the energy controlling specifications are supported by other policy resources of the other AF; a step of determining another policy template resource of the other AF including the energy controlling specifications; and a step of providing, to the WTRU, the other energy policy template resource of the other AF for the one or more media delivery sessions with the WTRU.

Prior to providing, to the WTRU, the energy policy template resource of the AF for the one or more media delivery sessions with the WTRU, the method may comprise a step of transmitting, to the WTRU, a second message comprising fourth information indicating that the policy template resource of the AF is an energy aware policy.

In an embodiment, a network node comprising a processor, a transmitter, a receiver, and a memory, may be configured to receive, from a media application provider, a first message comprising first information indicating an energy controlling policy template including an energy controlling specifications. The network node may be configured to determine whether the energy controlling specifications are supported by policy resources of an application function (AF). On condition that the energy controlling specifications are supported by the policy resources of the AF, the network node may be configured to determine an energy policy template resource of the AF based on the energy controlling specifications; and to provide, to a wireless transmit/receive unit (WTRU), the energy policy template resource of the AF for one or more media delivery sessions with the WTRU.

### BRIEF DESCRIPTION OF THE DRAWINGS

A more detailed understanding may be from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref. ") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is an example of a block diagram illustrating a 5G Media Streaming (5GMS) architecture, according to an embodiment;
FIG. 3 is an example of a block diagram illustrating an example of a real time communication architecture, according to an embodiment;
FIG. 4 is an example of diagram illustrating an example of a policy template resource state diagram, according to an embodiment;
FIG. 5 is an example of a flow chart illustrating an example of an application function (AF) selection with energy controlling specification support, according to an embodiment;
FIG. 6 is an example of a flow chart illustrating an example an application function selection with energy controlling specification adaptation, according to an embodiment;
FIG. 7 is an example of a block diagram illustrating an example of a 5GMS energy controlling dynamic policy feature, according to an embodiment;
FIG. 8 is an example of a diagram illustrating an example of an energy aware domain model for dynamic policies, according to an embodiment; and
FIG. 9 is an example of a flow chart illustrating an example of a method, implemented in a network node (e.g., a media delivery system) to enable the controlling of energy related information.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

Hereinafter, 'a' and 'an' and similar phrases are to be interpreted as 'one or more' and 'at least one'. Similarly, any term which ends with the suffix '(s)' is to be interpreted as 'one or more' and 'at least one'. The term 'may' is to be interpreted as 'may, for example'.

A sign, symbol, or mark of forward slash '/' is to be interpreted as 'and/or' unless particularly mentioned otherwise, where for example, 'A/B' may imply 'A and/or B'.

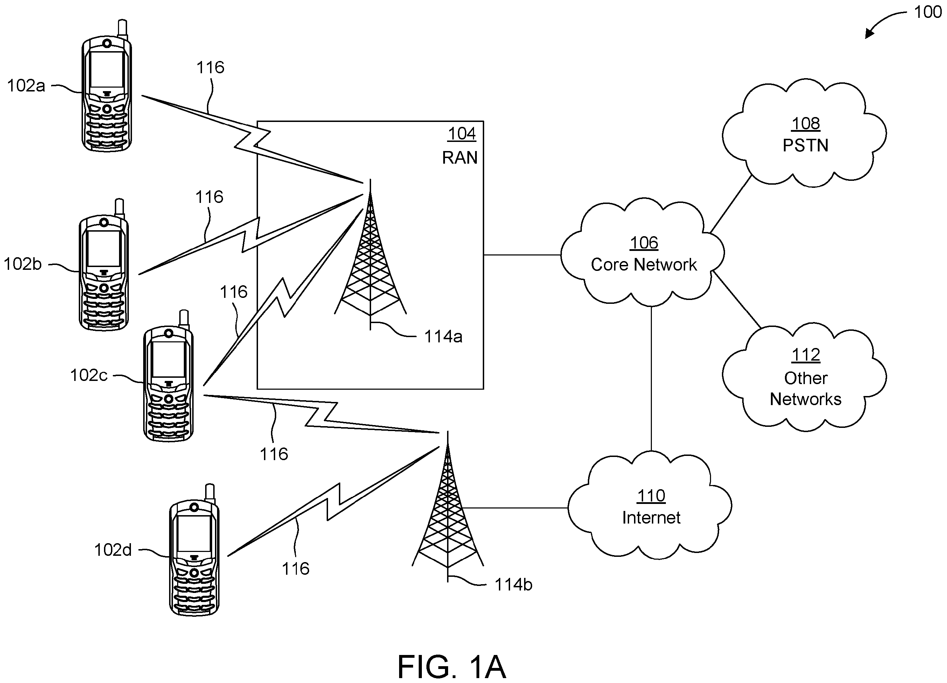

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

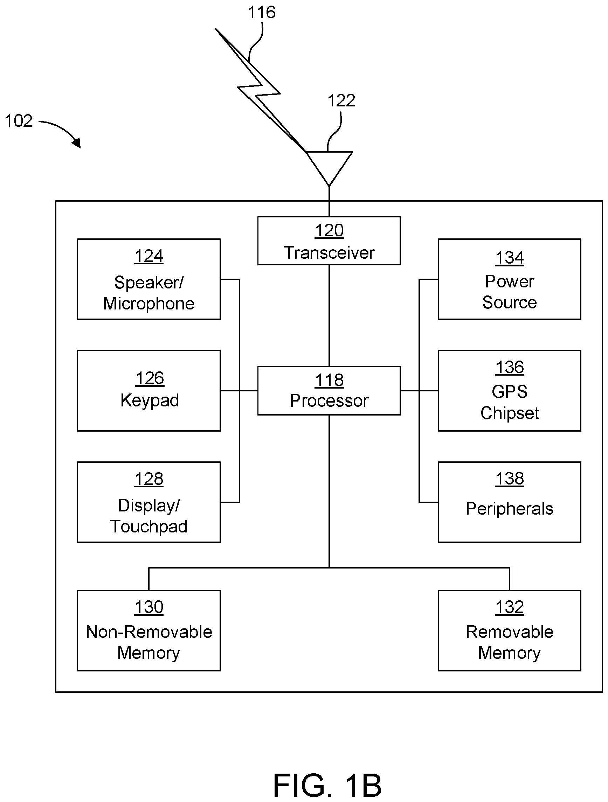

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

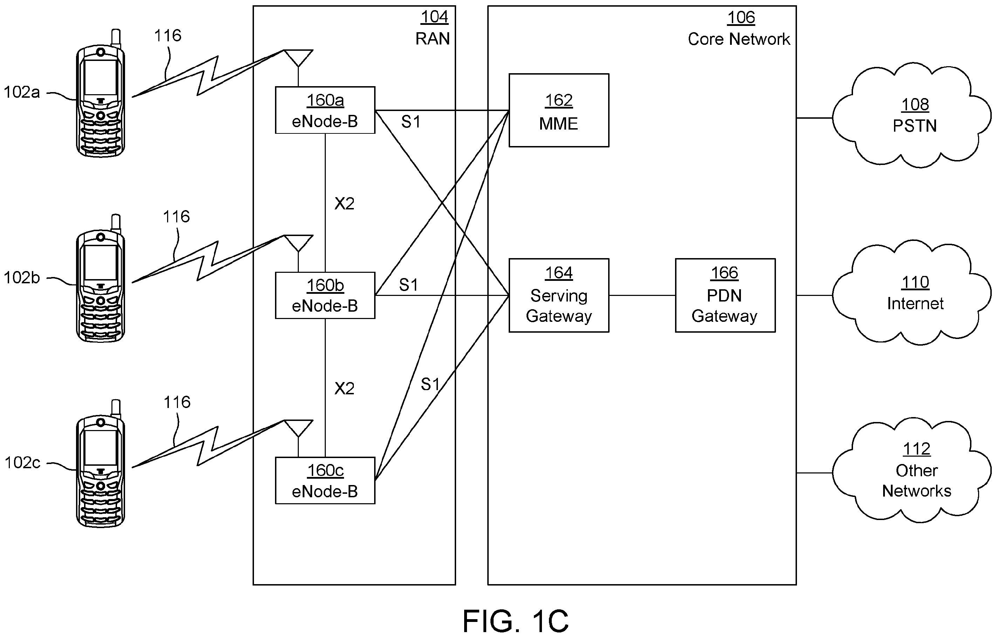

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast Fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications, such as machine-type communications devices in a macro coverage area. Machine-type communications devices may have certain capabilities, for example, limited capabilities including support for (e.g., only support for) certain and/or limited bandwidths. The machine-type communications devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

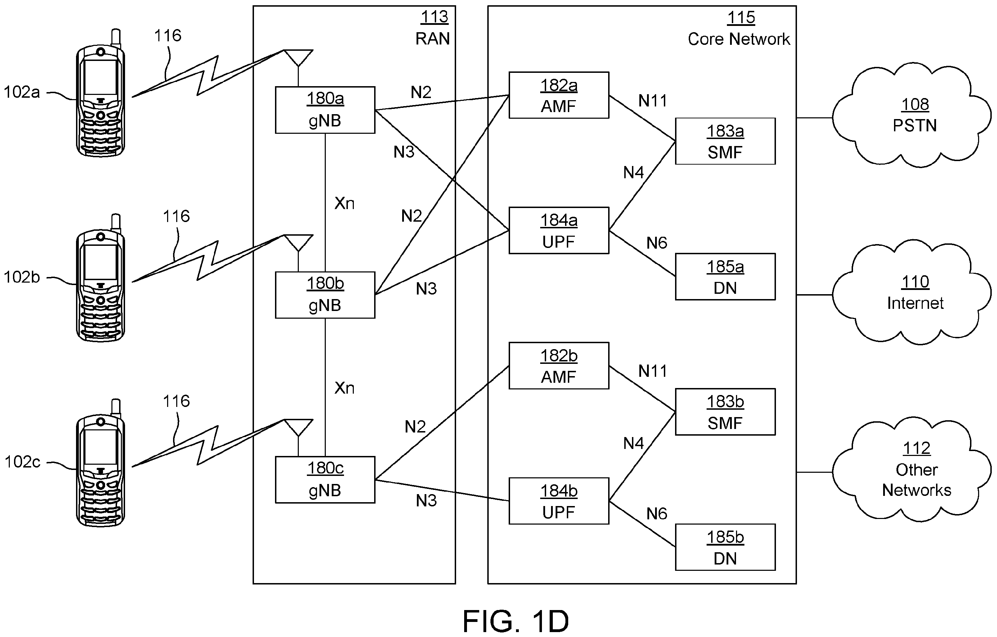

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one access and mobility management function (AMF) 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device (e.g., a network node) may be directly coupled to another device for purposes of testing and/or may performing testing using over-the-air wireless communications.

The one or more emulation devices may perform the one or more, including all, functions while not being implemented/deployed as part of a network node (e.g., wired and/or wireless communication network). For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The organization Greenhouse Gas Protocol "provides standards, guidance, tools and training for business and government to measure and manage climate-warming emissions." The first edition of their reporting standard was published in 2001, establishing a reporting framework for businesses. Relative to a given company, the concept of "scopes" is introduced, which delineate direct and indirect emission source, and may be used for accounting and reporting purposes. The reporting principally may involve the six greenhouse gases that are defined in the Kyoto protocol: carbon dioxide (CO₂), methane (CH₄), nitrous oxide (N₂O), hydrofluorocarbons (HFCs), perfluorocarbons (PFCs) and sulphurhexafluoride (SF₆).

A mobile system in the context of media delivery may imply several businesses (Content providers, mobile network operator (MNO), application providers, service providers, network equipment providers (core network, gNB , ...) and wireless transmit/receive unit (WTRU) (e.g., UE) device manufacturers which have to report energy related information to regulators. This may be the reason why 3GPP may have to provide some mechanisms to control such information.

Thus, the below various embodiments are in the field of mobile communication systems for media (e.g. video, audio, subtitle, teletext,... ) streaming and real time communication, aiming at providing mechanisms to enable a mobile network operator, a service provider, an application provider, a 3GPP core network provider, a RAN provider and a WTRU device manufacturer to control, collect, estimate and expose energy-related information.

It is noted that the increase of video services with multiple resolutions from standard definition (SD) to high definition (HD) to 4K and soon to 8K and beyond, as well as the number of delivery functions, as well as the number of codecs, as well as the number of different end user device profiles, as well as the number of video formats (high dynamic range versus standard dynamic range), as well as the introduction of wider color gamuts has brought about a corresponding increase in energy requirements of end-user devices and 3GPP infrastructures which is not consistent with the global need to reduce energy consumption while maintaining a high Quality of Experience (QoE) for the end-user.

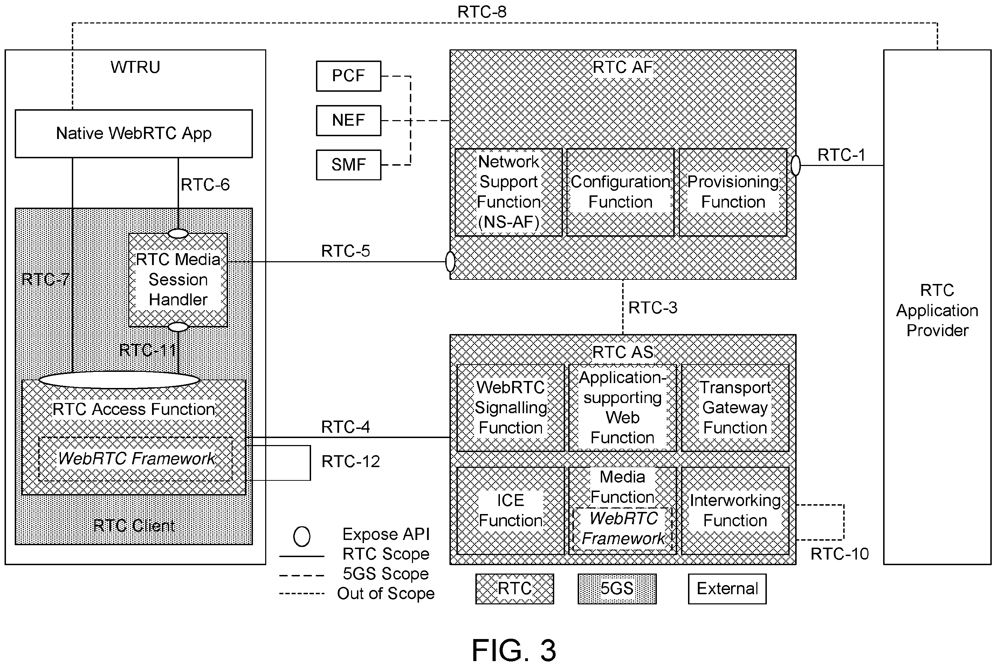

Different architectures may be defined to carry media components over the 4G, 5G and beyond mobile networks from an application provider up to an end-user. FIG. 2 and FIG. 3 represents two examples of possible application architectures that can be used to carry media components within a 5G mobile network. FIG. 1 shows an example of a media streaming (5GMS) architecture. FIG. 2 shows an example of a real time communication architecture. The 5G mobile network system may be considered in the below various embodiments, but this may be generalized to any other previous or future generation of mobile network (e.g., 3G, 4G, 6G,...).

The state-of-the-art of the 3GPP ecosystem (up to the Release 18) may define several architectures to deliver media content from an application provider. However, in these architectures, there does not exist any mechanism to configure and control energy consumption of a media delivery system from an application function (AF) if a media application provider requests it. It has to be considered that the AF function may be either a trusted function as well as an untrusted function. An update of policy templates resource would allow the application provider to configure a set of energy related parameters to indicate a type of controlling to use and to define energy credit limits at different levels: provision session, media delivery session or media component of the media delivery session. The media application provider may create an energy policy template resource and may update the provision session resource by adding the resource identifier in a policyTemplateIds list.

The various below embodiments may provide solutions for a media application provider to configure an energy controlling policy template. The energy controlling policy template may be applied to downlink or uplink media delivery sessions of an application function.

The 3GPP ecosystem may define some application functions to deliver media content from a media application provider to an end-user and offers video and entertainment services. The various embodiments below may consider that a media application provider (e.g., a video streaming service provider) wishes to reduce the environmental impact of its media services (e.g., video), e.g., requested by regulators or mobile network operators. It may want to adapt dynamically its media delivery mode to be energy efficient, e.g., for high audience content. It may want to activate or deactivate this energy media delivery mode dynamically because it may be subject to a regulatory environment who, especially in Europe, may require the reporting of its direct impact as well as the impact caused in its value chain.

In the state of the art, a policy template, identified by its policyTemplateId, may represent a set of policy control function/network exposure function (PCF/NEF) application programming interfaces (API) parameters which may define a service quality and/or associated charging for the corresponding media delivery session(s). The policy template may be configured as part of the provisioning procedures with the media application function (AF) and may be (e.g., subsequently) instantiated by a media session handler.

In an embodiment, adding a new property Energy ControllingSpecification in the policy template resource in order to consider energy parameters in the media delivery sessions that instantiate this policy template may be considered. An example of a property table of the policy template is shown in the Table 1 to take into account the EnergyControllingSpecification.

In another embodiment, the property EnergyControllingPolicyld may be also added in this table in order to provide a reference to an existing energy policy template in the system and link the current energy policy template to it.

**Table 1 : Energy policy template properties**

| **Property** | **Type** | **Cardinality** | **Usage** | **Description** |
|---|---|---|---|---|
| *policyTemplateId* | ResourceId | 1..1 | C: RO | Resource identifier of this policy template assigned by the media AF that is unique within the scope of the provisioning session. |
| | | | R: RO | |
| | | | U: RO | |
| *state* | string enum | 1..1 | C: RO | Current state of this policy template exposed to the 5GMS application provider by the media AF. |
| | | | R: RO | |
| | | | U: RO | |
| | | | | Only a policy template in the *READY* state may be instantiated as a dynamic policy instance and applied to media streaming sessions. |
| *stateReason* | ProblemDetails | 1..1 | C: RO | Additional details about the current state of this policy template exposed to the media application provider by the media AF. |
| | | | R: RO | |
| | | | U: RO | |
| | | | | The *instance* sub-property shall be present and shall indicate the URL of this policy template resource at reference point M1. |
| | | | | The *title* sub-property shall be present and shall indicate a human-readable representation of the *state* property specified above, e.g., "Policy template ready for use" or "Policy template invalid". |
| | | | | The *detail* sub-property shall be present and shall indicate a human-readable status/error message. |
| | | | | All other properties shall be omitted. |
| *externalReference* | String | 1..1 | C: RW | Additional identifier for this policy template, unique within the scope of its provisioning session, that may be cross-referenced with external metadata about a media delivery session. |
| | | | R: RW | |
| | | | U: RW | |
| | | | | Example: "HD_premium", «HD Energy Aware" |
| *applicationSessionContexts* | array(object) | 0..1 | C: RW | Exactly one application session context at reference point M4 to which this policy template may be applied. |
| | | | R: RW | |
| | | | U: RW | |
| | | | | Each object in the array shall specify at least one property. If more than one property is specified, instantiation of the policy template is restricted to the conjunction of all the object's properties. |
| *sliceInfo* | Snssai | 0..1 | C: RW | A network slice on which this policy template may be instantiated. |
| | | | R: RW | |
| | | | U: RW | |
| *dnn* | Dnn | 0..1 | C: RW | A data network on which this policy template may be instantiated. |
| | | | R: RW | |
| | | | U: RW | |
| *qoSSpecifications* | array(Qos Range) | 0..1 | C: RW | The network Quality of Service policy limits to be applied to the application service component(s) of media delivery sessions that instantiate this policy template. |
| | | | R: RW | |
| | | | U: RW | |
| | | | | Each member of the array is identified by a component reference that is unique in this array. |
| | | | | If present, the array shall contain at least one object. |
| *chargingSpecification* | Charging Specification | 0..1 | C: RW | The charging policy to be applied to media delivery sessions that instantiate this policy template is instantiated |
| | | | R: RW | |
| | | | U: RW | |
| *bdtPolicyld* | BdtReferenceId | 0..1 | C: RW | A reference to an existing background data transfer policy in the PCF. |
| | | | R: RO | |
| | | | U: RW | |
| | | | | Mutually exclusive with *bdtSpecification.* |
| *bdtSpecification* | BdtPolicy Schedule | 0..1 | C: RW | The background data Transfer policy specification to be associated with media delivery sessions that instantiate this policy Ttemplate. |
| | | | R: RO | |
| | | | U: RW | |
| | | | | Mutually exclusive with *bdtPolicyId* property. |
| *energyControllingPolicyld* | EnergControlling gyReferenceld | 0..1 | C: RW | A reference to an existing energy controlling policy in the PCF. |
| | | | R: RO | |
| | | | U: RW | Mutually exclusive with energy Controlling Specific *ation.* |
| *energyControllingSpecificatio n* | EnergyControlli ngSpecification | 0..1 | C: RW | The energy controlling specification to be applied to the provision session that instantiate this policy template. |
| | | | R: RW | |
| | | | U: RW | |

Details on the type EnergyControllingReferenceID is shown in Table 2 below.

**Table 2: Energy Reference ID simple data type**

| **Type name** | **Type** | **Description** |
|---|---|---|
| EnergyControllingReferenceld | string | String identifying an energy controlling reference ID |

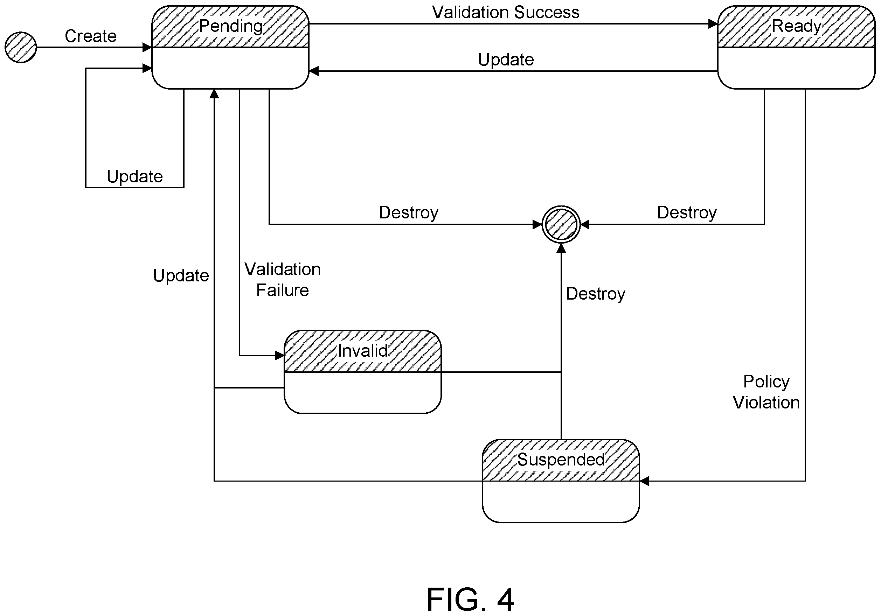

Referring to FIG. 4, in an embodiment, when a media application provider needs to monitor/control the energy consumption of its provision session, of its media delivery sessions or of its media components of a media delivery session, it may have to perform the selection or reselection (e.g., during/after an update of the policy template resource or a modification of one of its properties) of an application function (AF) which validates its energy Specification property resource.

Referring to FIG. 4, an example of a policy template resource state diagram is shown. Referring to FIG. 4, if the media delivery system operator (e.g., delivering the media components of a provision session of a media application provider) does not support any energy efficiency mechanisms in relation with the energy Specification, the policy template resource will move from PENDING state to INVALID state when the resource is created or from the READY to SUSPENDED state when an update of the policy template policy is performed. In any of these cases the policy template resource shall remain in an uncreated state in the media application function (e.g., INVALID or SUSPENDED states) and may not be (e.g., subsequently) instantiated by any media session handler for example.

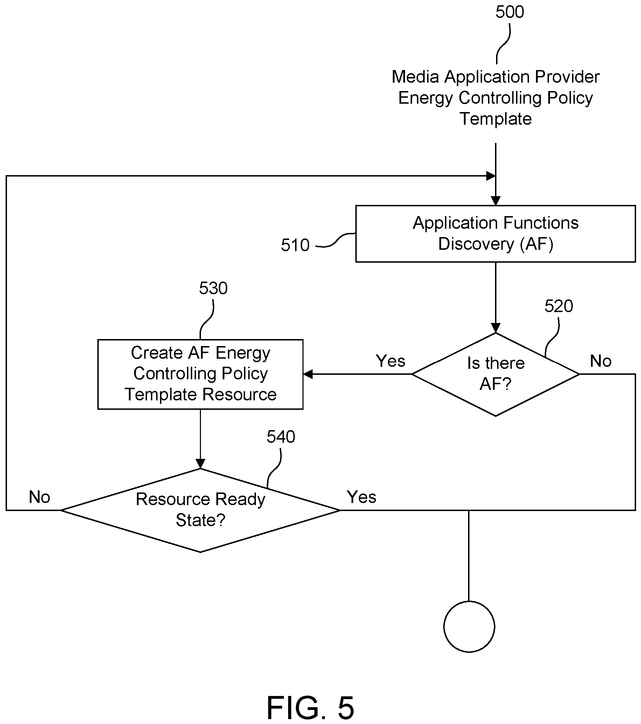

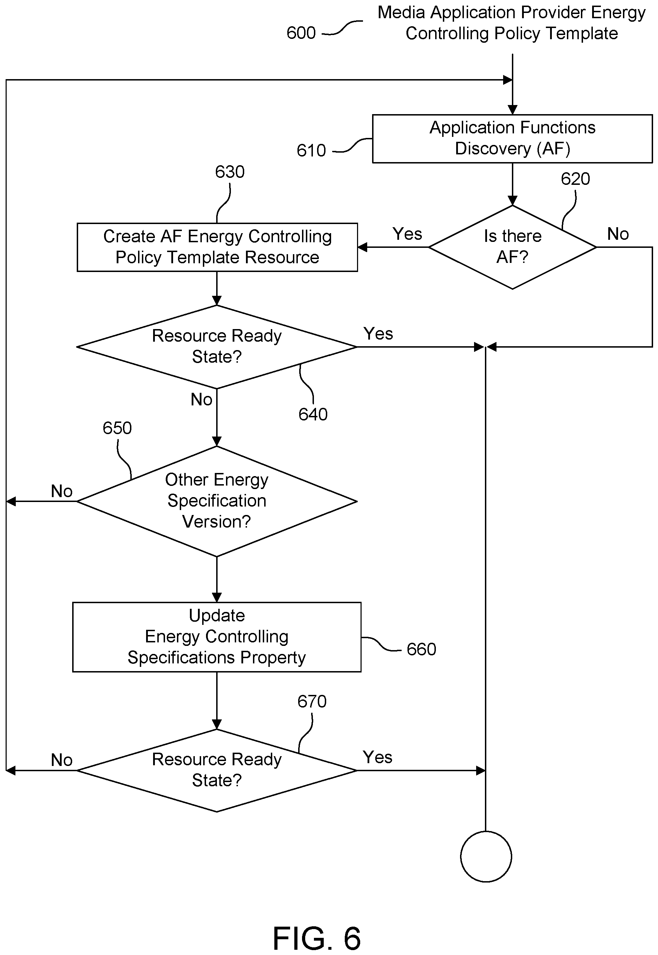

Referring to FIG. 5, an example of a flow chart illustrating an application function selection with energy controlling specification support is shown. Referring to FIG. 6, an example of a flow chart illustrating an application function selection with energy controlling specification adaptation is shown. The media application provider, which needs to control energy efficiency, may destroy the policy template resource and may try to create and validate it with another application function, thus the media delivery system, as shown in FIG. 5, steps 500 to 540, or update the uncreated policy instance resource with another Energy Specification supported by the media delivery system and the media application provider requirements as shown in Fig. 6, steps 650 to 670, wherein steps 600 to 640 of FIG. 6 are similar than steps 500 to 540 of FIG. 5.

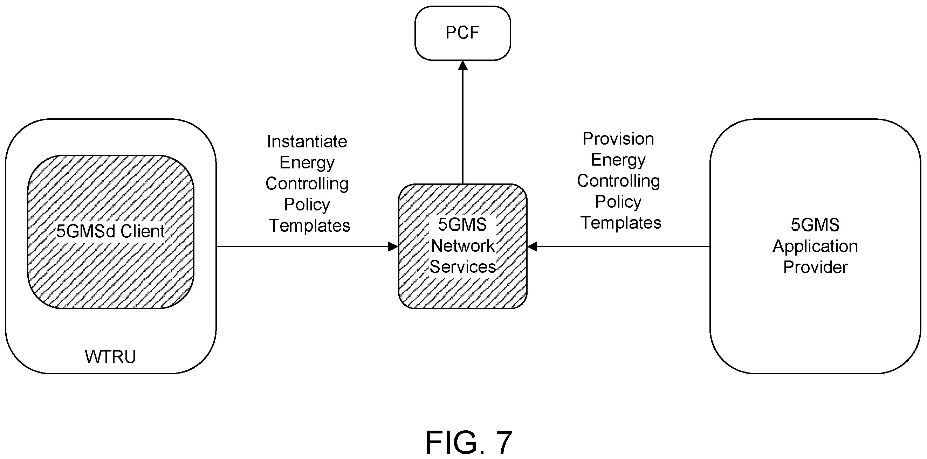

As another embodiment, the (e.g., new) energy policy template provisioned by the media application provider may be considered by the dynamic policy feature of the (e.g., 5G) media streaming, and, referring to FIG. 7, the WTRU may instantiate it.

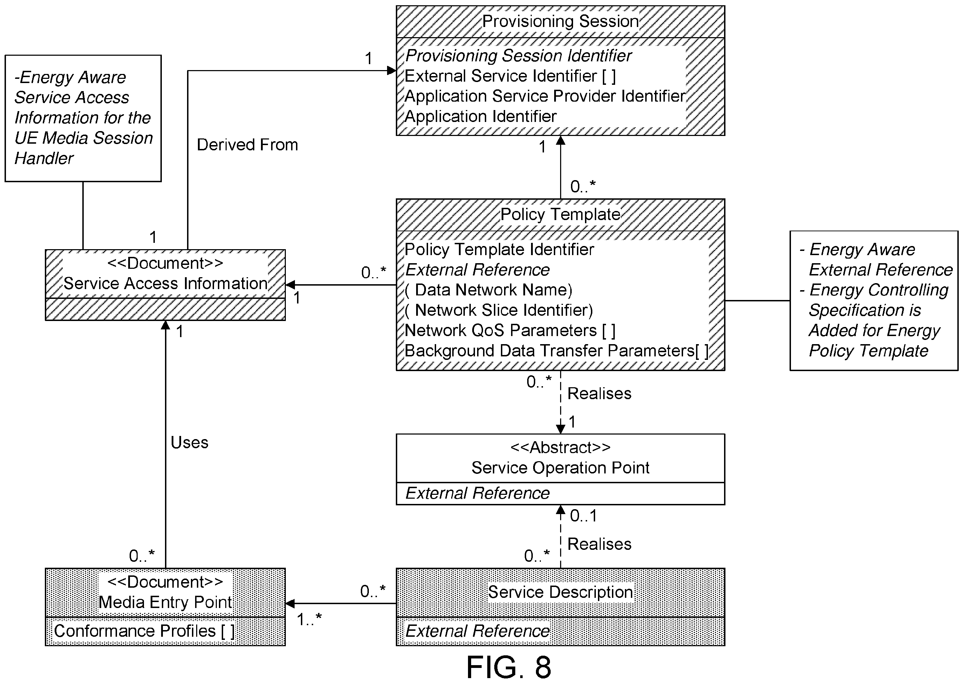

Referring to FIG. 8, a domain model for dynamic policies to consider energy is shown. Referring to FIG. 8, in an embodiment, dynamic policies may work as follow.

At a first step, a conceptual service operation point may be an abstract set of requirements that support a media streaming service (e.g., SD, HD, UHD). It may be identified by an external reference that is used to tag policy template resources provisioned in the 5GMS system and service descriptions included in media entry point documents. In particular, this external reference shall be used to indicate that the policy template may be an energy aware policy. In this last case, the external reference string could be 'energy aware'.

At a second step, the service operation point may be embodied in the 5G system by a policy template which is provisioned in the 5GMS network services by the 5GMS application provider within the scope of an umbrella provisioning session. A policy template may be defined as being applicable to a particular data network and/or network slice. The policy template may carry the external reference, network quality of service (QoS) parameters and energy of service (EoS) parameters added in the Energy Specification corresponding to a single service operation point. (Any number of policy templates provisioned for different data networks and/or network slices may reference the same service operation point.) The 5GMS network services may reject attempts to provision a policy template that specifies network QoS and EoS parameters outside acceptable bounds imposed by local system configuration.

In addition, the policy template may include a reference to an existing background data transfer policy. If no previously defined background data transfer policy exists, the policy template may instead include the parameters that may be used by the 5GMS network services to provision a background data transfer policy for the current provisioning session. These parameters may include desired time windows when background data transfer may be advertised to 5GMS clients, a quota representing the maximum number of 5GMS clients that are permitted to take advantage of background data transfers in each such time window, and a quota representing a ceiling for the aggregate volume of data that all 5GMS clients are permitted to transfer in each background data transfer window. An advertised time window may be not a guarantee that a request for background data transfer will actually be granted by the 5GMS System.

At a third step, the 5GMS application provider may make one or more media entry point documents (e.g., DASH MPDs) available for use by the 5GMS client. To take advantage of the dynamic policies feature, a media entry point document may include one or more service descriptions, each identifying the streaming requirements of a presentation that correspond to a single service operation point (e.g., SD, HD, UHD, EA SD, EA HD, EA UHD) and identified by means of an external reference. The same service description may be included in more than one media entry point document in case a common service operation point is applicable to multiple media presentations.

At a fourth step, when a media entry point is selected by the 5GMS client at the start of a media streaming session, the 5GMS client may retrieve service access information from a network-side component of the 5GMS system describing the set of available policy templates (e.g., the energy controlling policy template, provisioned at the second step and exposes this to a controlling application on the WTRU).

If background data transfer was provisioned as part of any policy templates at step 2 above, the service access information may include details of the advertised time windows when background data transfers are available and the data volume quota (if any). Maximum bit rates for the 5GMS client in either or both the uplink and downlink direction may also be nominated by the 5G system and signaled to the 5GMS client in the service access information. Finally, an endpoint in the 5GMS network services may be provided allowing the 5GMS client to subscribe to receive real-time notifications of background data transfer warning notifications.

If the energy specification was provisioned as part of any policy templates at the second step, the service access information may include details of energy mode, level of energy controlling, EoS specification and maximum authorized energy credits (see Table 3 below for details). Maximum authorized energy credits for the 5GMS client and also for the overall 5GMS delivery chain from the media application provider in either or both the uplink and downlink direction may also be nominated by the 5G system and signaled to the 5GMS client in the service access information. Finally, an endpoint in the 5GMS network services may be provided allowing the 5GMS client to subscribe to receive real-time notifications of energy warning notifications.

At a fifth step, at the start of a media streaming session, the controlling application on the WTRU may select one of the service descriptions listed in the media entry point document that may realize its preferred service operation point. Either the media player (when the service descriptions may be within the media entry point document) or the controlling application (when the service descriptions may be not within the media entry point document) may inform the 5GMS client of its choice by passing the corresponding external reference to it, e.g., 'energy aware'.

At a sixth step, if there is a policy template available for the current media streaming session with the indicated external reference, for example 'energy aware', the 5GMS client may instantiate this policy template by interacting with a network-side component of the 5GMS system in order to realize the service operation point described by the policy template and the service description. One effect of this may be that the corresponding network quality of service and/or energy of service may be applied to the media streaming session.

In another embodiment, the energy specification may have the properties listed in Table 3.

**Table 3: Definition of type Energy ControllingSpecification**

| **Property name** | **Data type** | **Cardinality** | **Description** |
|---|---|---|---|
| *energyControllingModeId* | string | 1..4 | This property indicates the mode of energy controlling to be applied by the Media Delivery System operator. |
| | | | For example, the energyModeId can be EE_MODE when the whole media delivery system should use the energy efficiency value for controlling. It can also be EC_MODE_ID when energy consumption value in *kWh* is used. It can also be CE_MODE_ID when Carbon emission in *g CO*₂e*.* It can also be PC_MODE_ID when Power consumption value in *kW* is used. |
| | | | Cardinality can go up to 4 when the Media Delivery System shall support several modes at the same time. |
| | | | These are some examples but other values can be defined. They have to be standardized. |
| *energyControllingLevel* | string | 1..1 | The property indicates at which level the energy has to be monitored/controlled. The possible values are: PROVISIONING_SESSI ON, MEDIA_DELIVERY_SE SSION, MEDIA_COMPONENT |
| *eoSControllingSpecification* | Array(Eos ControllingRange ) | 0..1 | The property indicates energy controlling policy limits to be applied to the provision session that instantiate the policy template or its media delivery sessions or the application service component(s) of the media delivery sessions. |
| | | | Each member of the array may be identified by an EosRange element reference that is unique in this array. |
| | | | If present, the array shall contain at least one object. |

Different modes may be defined in the energy specification to control the energy related information of the provision session. The controlling may be done by measuring the energy efficiency or the energy consumption or the carbon emission or the power consumption. The preferred mode may be selected depending on the capabilities of the mobile network to provide the energy related information and the media application provider/application to be able to use this information.

Once the mode is selected, the energy controlling may be done at different level to provide detailed information on the energy consumption. The first level, (e.g., PROVISIONING_SESSION), may consist in providing the energy related information of the overall provision session that instantiate the policy template. The second level, (e.g., MEDIA_DELIVERY_SESSION) may consist in providing the energy related information for each media delivery session of the provision session. For example, this may allow to discriminate the energy impact of one media delivery session compared to another. The third and last level, (e.g., MEDIA_COMPONENT) may consist of providing the energy related information for each media component (e.g., video, audio, teletext, ...) of a media delivery session.

When a level is selected, the eoSSpecification (see Table 4 below) which may be an array of EoSRange elements, may allow to set the energy credits limits for downlink and uplink directions depending on the level property value (e.g., levelEnergyControlling).

The authorized energy credit value may be provided for a provision session, a media delivery session or a component of the media delivery session. The energy credit value may depend on the EoS granularity: network slice, WTRU, PDU session, media component.

**Table 4: Definition of type EoSControllingRange**

| **Property name** | **Data type** | **Cardinality** | **Description** |
|---|---|---|---|
| timeWindow | TimeWindow | 1..1 | The absolute start date-time and stop date-time of the window at which the energy of service range is applied. |
| *downlinkEos ControllingSpe cification* | UnidirectionalEos ControllingSpecifi cation | 0..1 | EoS controlling specification in the downlink direction |
| | | | At least one of the two properties, *downlinkEosControllingSpecification* and *uplinkEosControllingSpecification* shall be present in the energy controlling policy template |
| *uplink EosControlling Specification* | UnidirectionalEos Specification | 0..1 | EoS controlling specification in the uplink direction |
| | | | At least one of the two properties, *downlinkEosControllingSpecification* and *uplinkEosControllingSpecification* shall be present in the Energy Controlling policy template |

Table 5 below, provides an example of details on the type of Energy Credit

**Table 5: Definition of type EnergyCredit**

| **Property name** | **Data type** | **Cardinality** | **Description** |
|---|---|---|---|
| *energyCreditU nit* | string | 1..1 | A unique string indicating the unit of the energy credit: *kWh, kW, g CO*₂e |
| *energyCredit* | decimal | 1..1 | This property indicates the value of the energy credits, e.g. the value of energy credits for one WTRU |

Table 6 below, provides an example of detail on the type UnidirectionalEosControllingSpecification.

**Table 6: Definition of type UnidirectionalEosControllingSpecification**

| **Property name** | **Data type** | **Cardinality** | **Usage** | **Description** |
|---|---|---|---|---|
| *EosGranularity* | string | 0..1 | RW | The property indicates to which granularity the energy credit refers to: network slice, WTRU, PDU session (e.g., media session), media component. |
| | | | | If absent, the PDU session granularity is preferred. If this property is set and the *sliceInfo* property is provided in the policy template, the current UnidirectionalEosControllingS pecification refers to this sliceInfo property, i.e. the maximum energy credit is specified for the S-NSSAI slice. |
| *sliceId* | Snssai | 0..1 | RW | This property indicates the identifier of the slice to which the maximum authorized energy credit applies. |
| *ueId* | Gpsi | 0..1 | RW | This property indicates the identifier of the WTRU to which the maximum authorized energy credit applies. |
| *flowId* | IP 5-tuple | 0..1 | RW | This property indicates the identifier of the media flow to which the maximum authorized energy credit applies. |
| *renewableEnergy* | boolean | 0..1 | RW | The property indicates that it is preferred to use renewable energy when possible. For example, this means that for a slice if at least the NG-RAN or one of the network resources/function uses renewable energy, this slice is preferred to another one which doesn't use renewable energy at all. |
| | | | | If true, the policy requests to prefer renewable energy |
| | | | | If false, no requirement to use renewable energy |
| *maximumAuthorisedPr ovisionSessionEnergyC redit* | EnergyCre dit | 0..1 | RW | Maximal energy credits authorized to a provision session. |
| | | | | The unit of an energy credit depends on the value of the *energyControllingModeId property.* |
| | | | | To use this property it is considered that the Media Delivery System has the capability to measure or estimate the current energy credit usage per provision session. |
| *energyControllingMedi aDeliverySessionSpecifi cation* | array(ener gyMDSSp ecification ) | 0..1 | RW | List of EoS controlling specifications for the media delivery sessions of the provision session created by the media application provider |
| *energyControllingMedi aComponentSpecificati on* | array(ener gyMCSpe cification) | 0..1 | RW | List of EoS controlling specifications for the components of the media delivery sessions of the provision session created by the media application provider |

Table 7 below, provides an example of details on the type energyMCSpecification.

**Table 7: Definition of type energyMCSpecification**

| **Property name** | **Data type** | **Cardinality** | **Description** |
|---|---|---|---|
| *componentIden tifier* | string | 1..1 | Unique identifier of a media component of a media delivery session |
| *maximumAutho risedCompone ntEnergyCredit* | EnergyCredit | 0..1 | Maximal energy credits authorized to a media component of a delivery session. |
| | | | The unit of an energy credit depends on the value of the *energyControllingModeId property.* |
| | | | *If* absent, no energy policy for the media component is applied. |
| | | | To use this property it is considered that the media delivery system has the capability to measure or estimate the current energy credit usage per component. |

Table 8 below, provides an example of details on the type energyMDSSpecification

| **Property name** | **Data type** | **Cardinality** | **Description** |
|---|---|---|---|
| *sessionId* | MediaDelivery SessionId | 1..1 | Unique identifier of the media delivery session |
| *maximumAutho risedMediaDeli verySessionEne rgyCredit* | EnergyCredit | 0..1 | Maximal energy credits authorized to a media delivery session. |
| | | | The unit of an energy credit depends on the value of the *energyControllingModeId property.* |
| | | | *If* absent, no energy policy for the media delivery session is applied. |
| | | | To use this property it is considered that the media delivery system has the capability to measure or estimate the current energy credit usage per session. |

The described above various embodiments may be detected at the mobile network configuration system or at the mobile service provider configuration system which may propose a configuration interface to enter the parameters to set up the energy controlling policy template.

The reference point M1 (See FIG. 2) can be also tracked in order to detect a creation of an energy controlling policy template and a creation or an update of the provision session resource to add the TemplateId of this policy.

On a WTRU side, after switching to an energy reduction mode, a reduction of the energy consumption may be observed when accessing a media service. The instantiation of the energy controlling policy template by the media session handler entity can also be tracked to detect if some maximumAuthorisedEnergyCredit has been set for the WTRU (e.g., WTRU value for EosGranularity or maximumAuthorisedEnergyCredit for delivery session or media component).

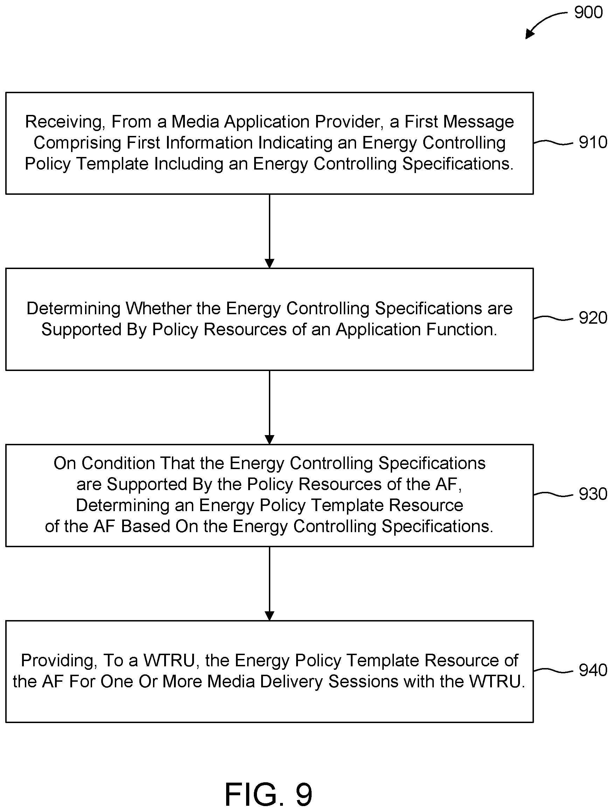

Referring to FIG. 9, in an embodiment, a method 900, implemented in a network node (e.g., a media delivery system), may comprise a step wherein network node may receive 910, from a media application provider, a first message comprising first information indicating an energy controlling policy template including an energy controlling specifications. The energy controlling specifications may indicate EoS specifications in any of a downlink direction, and an uplink direction. The method 900 may further comprise a step wherein the network node may determine 920 whether the energy controlling specifications are supported by policy resources of an application function (AF). On condition that the energy controlling specifications are supported by the policy resources of the AF, the method 900 may comprise a step wherein the network node may determine 930 an energy policy template resource of the AF based on the energy controlling specifications, and a step wherein the network node may provide, to a WTRU, the energy policy template resource of the AF for one or more media delivery sessions with the WTRU.

On condition that the energy controlling specifications are not supported by the policy resources of the AF, the method 900 may comprise a step wherein the network node may switch a state of the policy resources of the AF from a created state to an uncreated state, a step wherein the network node may determine another AF wherein the energy controlling specifications are supported by other policy resources of the other AF, a step wherein the network node may determine another policy template resource of the other AF including the energy controlling specifications, and provide, to the WTRU, the other energy policy template resource of the other AF for the one or more media delivery sessions with the WTRU.

Prior to providing, to the WTRU, the energy policy template resource of the AF for the one or more media delivery sessions with the WTRU, the method may comprise a step wherein the network node may transmit, to the WTRU, a second message comprising fourth information indicating that the policy template resource of the AF is an energy aware policy.

The energy controlling specifications may comprise second information indicating any of a mode of energy controlling to be applied, an energy controlling level, and an energy of service (EoS) controlling range. The EoS controlling range may comprise a time window indicating an absolute start date time and stop date time of the window at which the EoS range is applied.

The energy policy template resource of the AF for the one or more media delivery sessions with the WTRU may comprise third information indicating an energy credit related to the one or more media delivery sessions or a provisioning session, for any of the WTRU, a radio access network, core network nodes, and an application server. The energy credit indication may comprise a maximal energy credit authorized to any of the one or more media delivery sessions or provisioning session, and media components, for any of the WTRU, a radio access network, core network nodes, and an application server.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

## Claims

1. Method, implemented in a network node, the method comprising
receiving, from a media application provider, a first message comprising first information indicating an energy controlling policy template including an energy controlling specifications;
determining whether the energy controlling specifications are supported by policy resources of an application function (AF);
on condition that the energy controlling specifications are supported by the policy resources of the AF, determining an energy policy template resource of the AF based on the energy controlling specifications; and
providing, to a wireless transmit/receive unit (WTRU), the energy policy template resource of the AF for one or more media delivery sessions with the WTRU.

2. The method of claim 1, wherein the energy controlling specifications comprise second information indicating any of a mode of energy controlling to be applied, an energy controlling level, and an energy of service (EoS) controlling range.

3. The method of claim 2, wherein the EoS controlling range comprises a time window indicating an absolute start date time and stop date time of the window at which the EoS range is applied.

4. The method of any of claim 1 to claim 3, wherein the energy controlling specifications indicate EoS specifications in any of a downlink direction, and an uplink direction.

5. The method of any of claim 1 to claim 4, wherein the energy policy template resource of
the AF for the one or more media delivery sessions with the WTRU comprises third information indicating an energy credit related to the one or more media delivery sessions or a provisioning session, for any of the WTRU, a radio access network, core network nodes, and an application server.

6. The method of claim 5, wherein the energy credit indication comprises a maximal energy
credit authorized to any of the one or more media delivery sessions or provisioning session, and media components, for any of the WTRU, a radio access network, core network nodes, and an application server.

7. The method of any of claim 1 to claim 6, comprising, on condition that the energy controlling specifications are not supported by the policy resources of the AF:
switching a state of the policy resources of the AF from a created state to an uncreated state;
determining another AF wherein the energy controlling specifications are supported by other policy resources of the other AF;
determining another policy template resource of the other AF including the energy controlling specifications; and
providing, to the WTRU, the other energy policy template resource of the other AF for the one or more media delivery sessions with the WTRU.

8. The method of any of claim 1 to claim 7, comprising, prior to providing, to the WTRU, the energy policy template resource of the AF for the one or more media delivery sessions with the WTRU, transmitting, to the WTRU, a second message comprising fourth information indicating that the policy template resource of the AF is an energy aware policy.

9. A network node comprising a processor, a transmitter, a receiver, and a memory, and configured to:
receive, from a media application provider, a first message comprising first information indicating an energy controlling policy template including an energy controlling specifications;
determine whether the energy controlling specifications are supported by policy resources of an application function (AF);
on condition that the energy controlling specifications are supported by the policy resources of the AF, determine an energy policy template resource of the AF based on the energy controlling specifications; and
provide, to a wireless transmit/receive unit (WTRU), the energy policy template resource of the AF for one or more media delivery sessions with the WTRU.

10. The network node of claim 9, wherein the energy controlling specifications comprise second information indicating any of a mode of energy controlling to be applied, an energy controlling level, and an energy of service (EoS) controlling range.

11. The network node of claim 10, wherein the EoS controlling range comprises a time window indicating an absolute start date time and stop date time of the window at which the EoS range is applied.

12. The network node of any of claim 9 to claim 11, wherein the energy controlling specifications indicate EoS specifications in any of a downlink direction, and an uplink direction.

13. The network node of any of claim 9 to claim 12, wherein the energy policy template resource of the AF for the one or more media delivery sessions with the WTRU comprises third information indicating an energy credit related to the one or more media delivery sessions or a provisioning session, for any of the WTRU, a radio access network, core network nodes, and an application server.

14. The network node of claim 13, wherein the energy credit indication comprises a maximal energy credit authorized to any of the one or more media delivery sessions or provisioning session, and media components, for any of the WTRU, a radio access network, core network nodes, and an application server.

15. The network node of any of claim 9 to claim 14, configured to, on condition that the energy controlling specifications are not supported by the policy resources of the AF:
switch a state of the policy resources of the AF from a created state to an uncreated state;
determine another AF wherein the energy controlling specifications are supported by other policy resources of the other AF;
determine another policy template resource of the other AF including the energy controlling specifications; and
provide, to the WTRU, the other energy policy template resource of the other AF for the one or more media delivery sessions with the WTRU.
